# FASCICULE DE BREVET EUROPEEN

(11) **EP 2 571 813 B1**
(45) Date de publication et mention de la délivrance du brevet: **17.08.2016**
(21) Numéro de dépôt: 11720453.7
(22) Date de dépôt: 17.05.2011
(51) Int. Cl.: C01G 25/00, B01J 21/06, B01J 23/00, B01J 23/30, B01D 53/94, B01J 35/10, C01G 41/00

(54) **COMPOSITION A BASE DE CERIUM, DE ZIRCONIUM ET DE TUNGSTENE, PROCEDE DE PREPARATION ET UTILISATION EN CATALYSE**
ZUSAMMENSETZUNG AUF DER BASIS VON CER, ZIRKONIUM UND WOLFRAM, HERSTELLUNGSVERFAHREN UND VERWENDUNG FÜR KATALYSEVERFAHREN
COMPOSITION BASED ON CERIUM, ZIRCONIUM AND TUNGSTEN, PREPARATION PROCESS AND USE IN CATALYSIS

(30) Priorité: 19.05.2010 FR 1002111
(43) Date de publication de la demande: 27.03.2013
(73) Titulaire: Magnesium Elektron Limited, Salford Quays, Salford M50 3XE (GB)
(72) Inventeur: HERNANDEZ, Julien, F-92160 Antony (FR); ROHART, Emmanuel, 80000 Amiens (FR); JORGE COELHO MARQUES, Rui, F-75017 Paris (FR); HARRIS, Deborah, Jane, Swinton Manchester M27 0AY (GB); JONES, Clare, Crosby Liverpool L23 0RQ (GB)
(74) Mandataire: Andrews, Paul David
(86) Numéro de dépôt international: PCT/EP2011/057954
(87) Numéro de publication internationale: WO 2011/144601

(56) Documents cités:
- WO-A1-2008/046920
- WO-A1-2008/046921
- US-A- 3 860 529
- US-A1- 2005 059 547
- US-A1- 2006 233 691
- US-A1- 2009 005 239
- BOZO C ET AL: "Characterisation of ceria-zirconia solid solutions after hydrothermal ageing", APPLIED CATALYSIS A: GENERAL, ELSEVIER SCIENCE, AMSTERDAM, NL, vol. 220, no. 1-2, 25 octobre 2001 (2001-10-25), pages 69-77, XP004308364, ISSN: 0926-860X, DOI: DOI:10.1016/S0926-860X(01)00710-4
- FORNASIERO P ET AL: "Rh-Loaded CeO2-ZrO2 Solid Solutions as Highly Efficient Oxygen Exgangers: Dependence of the Reduction Behaviour and the Oxygen Storage Capacity on the Structural Properties", JOURNAL OF CATALYSIS, ACADEMIC PRESS, DULUTH, MN, US, vol. 151, 1 janvier 1995 (1995-01-01), pages 168-177, XP002214959, ISSN: 0021-9517, DOI: DOI:10.1006/JCAT.1995.1019
- P. DURAN, M. GONZALEZ, C. MOURE, J. R. JURADO AND C. PASCUAL: "A new tentative phase equilibrium diagram for the ZrO2-CeO2 system in air", JOURNAL OF MATERIALS SCIENCE, vol. 25, 1 janvier 1990 (1990-01-01), pages 5001-5006, XP002618665,

## Description

La présente invention concerne une composition à base de cérium, de zirconium et de tungstène, son procédé de préparation et son utilisation en catalyse, notamment pour le traitement des gaz d'échappement.

On sait que les oxydes d'azote (NOx) sont nocifs pour l'environnement. Le traitement des gaz, gaz issus de moteurs des véhicules ou d'installations fixes, qui contiennent ces oxydes afin de les transformer en azote est donc un enjeu important.

Une méthode connue pour ce traitement est le procédé SCR dans lequel la réduction des NOx est effectuée par de l'ammoniac ou un précurseur de l'ammoniac comme l'urée, en présence d'un catalyseur.

L'efficacité du procédé SCR reste cependant à améliorer. C'est ainsi que l'on cherche des catalyseurs à capacité de stockage de l'ammoniaque augmentée. Par ailleurs l'efficacité à basse température reste aussi à augmenter. Ainsi, les systèmes catalytiques utilisés actuellement pour la mise en oeuvre de ce procédé ne sont souvent efficaces que pour des températures supérieures à 250°C. Enfin, on cherche aussi des catalyseurs dont la résistance au vieillissement est améliorée.

L'objet de l'invention est donc de fournir des catalyseurs plus efficaces notamment pour la catalyse SCR.

Dans ce but, l'invention concerne une composition à base de cérium, de zirconium et de tungstène et qui est caractérisée en ce qu'elle présente les teneurs massiques suivantes, exprimées en oxyde :
- oxyde de cérium : entre 5 et 30%;
- oxyde de tungstène : entre 2 et 17%;
- le complément en oxyde de zirconium
et en ce qu'après un vieillissement à 750°C sous une atmosphère d'air à 10% d'eau elle présente une structure cristallographique biphasique comprenant une phase de zircone tétragonale et une phase de zircone monoclinique, sans présence d'une phase cristallisée contenant du tungstène.

US2005/0059547 décrit des compositions à base d'oxydes de cérium et de zirconium caractérisé en ce que le nombre total de moles de Ce et Zr est d'au moins 85% sur la base du nombre total de moles de métal dans l'oxyde métallique et par une rapport molaire Ce / Zr variant entre 1/9 et 9/1.Les compositions pouvent contenir un troisième élément tel que le tungstène. US2005/0059547 ne décrit pas des compositions ayant après vieillissement une structure cristallographique biphasique comprenant une phase de zircone tétragonale et une phase de zircone monoclinique, sans présence d'une phase cristallisée contenant du tungstène.

Bozo et al, "Characterisation of ceria-zirconia solid solutions after hydrothermal ageing", Applied Catalysis A (2001), 220, 1-2, 69-77 décrit des compositions d'oxydes de cérium et de zirconium. La presence d'un oxide de tungstène n'est pas décrite.

WO2008/046920 concerne des produits à base d'oxydes de zirconium, de silicium et d'un autre élément comme le tungstène ou le cérium.

Les compositions de l'invention ont pour avantage de présenter à la fois une capacité de conversion des NOx améliorée et une capacité d'adsorption de l'ammoniaque qui est importante.

D'autres caractéristiques, détails et avantages de l'invention apparaîtront encore plus complètement à la lecture de la description qui va suivre faite en référence aux dessins annexés dans lesquels :
- la figure 1 est un diagramme RX d'un produit de l'art antérieur;
- la figure 2 est un diagramme RX d'un produit selon l'invention.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Les valeurs de surface spécifiques qui sont indiquées pour une température et une durée données correspondent, sauf indication contraire, à des calcinations sous air à un palier à cette température et sur la durée indiquée.

Les calcinations mentionnées dans la description sont des calcinations sous air sauf indication contraire.

Les teneurs sont données en masse et en oxyde sauf indication contraire.

On précise aussi pour la suite de la description que, sauf indication contraire, dans les fourchettes de valeurs qui sont données, les valeurs aux bornes sont incluses.

Pour la présente description on entend aussi par terre rare les éléments du groupe constitué par l'yttrium et les éléments de la classification périodique de numéro atomique compris inclusivement entre 57 et 71.

La composition de l'invention se caractérise tout d'abord par la nature et les proportions de ses constituants. Ainsi, elle est à base de zirconium, de cérium et de tungstène, ces éléments étant présents dans la composition généralement sous la forme d'oxydes. Il n'est toutefois pas exclu que ces éléments puissent être présents au moins en partie sous une autre forme par exemple sous forme d'hydroxydes ou d'oxyhydroxydes.

Ces éléments sont par ailleurs présents dans des proportions spécifiques qui vont être données plus précisément ci-dessous et qui sont exprimées en masse d'oxyde.

Ainsi, le cérium est présent dans une proportion comprise entre 5 et 30%, plus particulièrement entre 10% et 25% et encore plus particulièrement entre 12% et 22%.

Le tungstène est présent dans une proportion comprise entre 2 et 17%, plus particulièrement entre 10% et 15%.

Le zirconium constitue le complément de la composition.

L'invention concerne aussi les compositions telles que définies plus haut mais qui ne contiennent pas l'un des métaux du groupe constitué par le fer, le cuivre, le manganèse et les terres rares.

L'invention concerne aussi les compositions constituées essentiellement de zirconium, de cérium et de tungstène. On entend par là qu'elles peuvent comporter d'autres éléments sous forme de traces ou d'impuretés, comme l'hafnium notamment, mais qu'elles ne comportent pas d'autres éléments susceptibles notamment d'avoir une influence sur leurs propriétés d'adsorption du NH₃ ou de résistance au vieillissement.

Une autre caractéristique importante des compositions de l'invention est leur structure cristallographique. Ces compositions présentent en effet une structure cristallographique biphasique.

La description qui suit de la structure des compositions de l'invention s'applique à des compositions qui ont subi un vieillissement à 750°C dans une atmosphère d'air à 10% d'eau sur une durée de 16 heures. La structure est déterminée par la technique de diffraction des rayons X (DRX).

Les compositions de l'invention présentent après un tel vieillissement une structure biphasique, c'est-à-dire ici une structure qui ne contient qu'une phase de zircone tétragonale et qu'une phase de zircone monoclinique. L'existence de ces deux phases est mise en évidence d'une manière connue par la présence des pics respectifs décrits dans les fiches JCPDS, c'est-à-dire la fiche 01-088-2390 pour la phase monoclinique ou baddeleyite et, par exemple, par la fiche 01-088-2398 pour la phase tétragonale. Plus particulièrement, la phase tétragonale peut être majoritaire. Ainsi, les deux phases précitées peuvent être présentes dans un rapport d'au moins 5. Ce rapport correspond au rapport : intensité du pic de phase tétragonale (pic 2-thêta vers 30°)/intensité du pic de phase monoclinique (pic 2-thêta vers 28,2°). Ce rapport peut être plus particulièrement d'au moins 7 et encore plus particulièrement d'au moins 9.

Par ailleurs les compositions de l'invention ne présentent pas de phase cristallisée contenant du tungstène. Par « phase cristallisée contenant du tungstène» on entend des phases correspondant à des tungstates de cérium et/ou de zirconium ou de type oxyde de tungstène WO₃.xH₂O, par exemple un tungstate de formule Ce₄W₉O₃₃ correspondant à la fiche JCPDS 00-025-0192. Par « ne présentent pas » on entend le fait que les diagrammes DRX obtenus à partir de ces compositions ne font pas apparaître l'existence, notamment sous forme de pics de diffraction, d'une telle phase dans une zone comprise entre 2-thêta de 22° à 28°.

Sans vouloir être lié par une théorie, on peut penser que le tungstène est présent dans la composition de l'invention sous forme d'espèces chimiques de type tungstates (WO₄)ₙ plus ou moins polymérisées et stables car malgré le vieillissement ces espèces n'ont pas réagi avec les éléments cérium et zirconium des compositions. Si tel n'avait pas été le cas, les produits de réaction de ces espèces avec les éléments précités auraient été mis en évidence par l'analyse DRX qui aurait fait apparaitre des phases de type tungstates de cérium et/ou de zirconium correspondant à ces produits.

Les compositions de l'invention ne présentent pas de phase cristallisée d'oxyde de cérium, la phase tétragonale mentionnée plus haut pouvant correspondre à un oxyde mixte cérium/zirconium dans lequel le cérium est en solution solide dans l'oxyde de zirconium.

Les compositions de l'invention présentent par ailleurs une surface spécifique importante même à température élevée. Ainsi, elles présentent après vieillissement dans les conditions de température, de durée et d'atmosphère donnée ci-dessus une surface spécifique d'au moins 30 m²/g, plus particulièrement d'au moins 40 m²/g. La valeur de cette surface peut aller jusqu'à environ 60 m²/g.

Les compositions de l'invention ont une capacité d'adsorption de l'ammoniac d'au moins 2,5 ml/g, cette capacité peut être plus particulièrement d'au moins 4 ml/g et encore plus particulièrement d'au moins 5 ml/g. La valeur de cette capacité peut aller jusqu'à environ 10 ml/g. Cette capacité d'adsorption est mesurée par une méthode de désorption programmée en température (TPD) qui est décrite plus précisément ci-après. Elle est mesurée sur des produits calcinés à 800°C pendant 4 heures.

Le procédé de préparation des compositions de l'invention va maintenant être décrit.

Ce procédé est caractérisé en ce qu'on met en contact ou on mélange une solution ou une suspension d'un sel ou d'un composé de cérium avec un composé à base de tungstène et d'hydroxyde de zirconium puis on calcine le produit obtenu après le mélange.

Ce procédé met donc en oeuvre un composé à base de tungstène et d'hydroxyde de zirconium qui a été préalablement préparé selon un procédé spécifique qui va être décrit plus précisément ci-dessous.

### Préparation du composé à base d'hydroxyde de zirconium et de tungstène

Ce procédé comporte une première partie dans laquelle on prépare un hydroxyde de zirconium. Cette première partie comprend les étapes suivantes :
- (a) on prépare une solution aqueuse comportant des anions sulfates et un sel de zirconium, qui peut être plus particulièrement de l'oxychlorure de zirconium, dans des proportions telles que le rapport ZrO₂ / SO₃ est compris entre 1/0,40 à 1/0,52,
- (b) on refroidit la solution à une température inférieure à 25°C,
- (c) on ajoute un composé alcalin afin de précipiter un hydroxyde amorphe de zirconium,
- (d) on filtre et on lave l'hydroxyde de zirconium avec de l'eau ou un composé alcalin pour éliminer les quantités résiduelles de sulfate et éventuellement de chlorure.

Selon un premier mode de réalisation de l'invention, le composé à base de tungstène et d'hydroxyde de zirconium peut être préparé par mélange de cet hydroxyde de zirconium tel qu'obtenu à l'issue de l'étape (d) ci-dessus et remis en suspension dans l'eau avec une solution ou une suspension d'un sel ou d'un composé de tungstène. Ce sel peut être plus particulièrement du métatungstate, du paratungstate ou du tungstate d'ammonium ou de sodium, les sels d'ammonium étant ici préférés. La solution ou suspension est utilisée dans les quantités stoechiométriques nécessaires pour obtenir le rapport en masse Zr/W convenable dans la composition finale recherchée.

A l'issue de ce mélange on obtient une suspension d'un composé à base de tungstène et d'hydroxyde de zirconium qui est soumis à un traitement hydrothermal à une pression d'au plus 6 bars, plus particulièrement d'au plus 3 bars. Avant le traitement hydrothermal il est possible, notamment dans le cas d'utilisation d'un sel de sodium comme composé du tungstène, de séparer le produit solide de la suspension et de le laver par tout moyen connu. Ce produit lavé est remis ensuite en suspension pour le traitement hydrothermal.

Ce traitement hydrothermal consiste à chauffer une suspension aqueuse du composé à une température qui peut être notamment supérieure à 100°C sous pression atmosphérique ou à une pression supérieure. Le traitement hydrothermal peut être réalisé plus particulièrement sous une pression de 3 bars pendant 5 heures.

A l'issue du traitement hydrothermal on peut éventuellement séparer de nouveau le produit solide de la suspension ainsi obtenue et laver ce produit. Ce produit obtenu peut être soit séché pour être obtenu et conservé sous forme solide soit maintenu et conservé sous forme d'une suspension pour la suite du procédé qui sera décrite plus loin.

Selon un second mode de réalisation, le composé à base de tungstène et d'hydroxyde de zirconium peut être obtenu aussi à partir de l'hydroxyde de zirconium tel qu'obtenu à l'issue de l'étape (d) du procédé décrit ci-dessus et en mélangeant, comme décrit précédemment une suspension de cet hydroxyde de zirconium avec le sel ou le composé de tungstène comme décrit plus haut mais qui peut être tout particulièrement ici du métatungstate de sodium. Toutefois, dans le cas de ce second mode, le pH du milieu obtenu à la suite de ce mélange est ajusté à une valeur comprise entre 6 et 8 par addition d'un acide comme de l'acide nitrique. On peut séparer ensuite par tout moyen connu le produit solide de la suspension et ce produit peut aussi être lavé.

Le produit obtenu est remis en suspension dans l'eau et cette suspension est ensuite soumise à un traitement hydrothermal selon les mêmes conditions que celles qui ont été décrites plus haut avec aussi un traitement ultérieur identique du produit à l'issue du traitement hydrothermal.

Pour la préparation de l'hydroxyde de zirconium selon les étapes (a) à (d) du procédé qui vient d'être décrit, on pourra se référer à l'ensemble de la description de WO 2007/088326.

Le composé à base d'hydroxyde de zirconium et de tungstène est ensuite utilisé pour la préparation de la composition selon l'invention selon deux variantes qui vont être décrites ci-dessous.

### Préparation de la composition selon l'invention

Selon une première variante, on forme tout d'abord une solution ou une suspension de sels ou de composés de cérium.

A titre de sels, on peut choisir les sels d'acides inorganiques comme les nitrates, les sulfates ou les chlorures.

On peut aussi utiliser les sels d'acides organiques et notamment les sels d'acides carboxyliques aliphatiques saturés ou les sels d'acides hydroxycarboxyliques. A titre d'exemples, on peut citer les formiates, acétates, propionates, oxalates ou les citrates.

Il est aussi possible d'utiliser le cérium sous forme d'un sol ou d'une suspension colloïdale. L'expression suspension colloïdale ou sol désigne ici tout système constitué de fines particules solides, généralement d'oxyde ou d'oxyhydroxyde de cérium, de dimensions colloïdales, c'est à dire des particules dont la taille est située généralement entre 1 nm et 50 nm, plus particulièrement entre 1 nm et 20 nm. Les tailles données ici sont mesurées par la technique de diffusion de lumière. Ces particules sont en suspension stable dans une phase liquide.

On imprègne ensuite le composé à base de tungstène et d'hydroxyde de zirconium séché, sous forme solide tel qu'obtenu par le procédé décrit précédemment avec la solution ou la suspension de cérium. La solution ou suspension est utilisée dans les quantités stoechiométriques nécessaires pour obtenir le rapport en masse Zr/Ce convenable dans la composition finale recherchée.

On utilise plus particulièrement l'imprégnation à sec. L'imprégnation à sec consiste à ajouter au produit à imprégner un volume d'une solution ou suspension aqueuse de l'élément qui est égal au volume poreux du solide à imprégner.

Après imprégnation, on obtient un composé à base d'hydroxyde de zirconium et à base de cérium et de tungstène qui peut être éventuellement séché. Ensuite ce composé est calciné. La calcination a lieu à une température qui peut être comprise par exemple entre 300°C et 800°C, plus particulièrement entre 500°C et 800°C. Cette calcination se fait généralement sous air.

Selon une deuxième variante, on part du composé à base de tungstène et d'hydroxyde de zirconium tel qu'obtenu dans le procédé décrit plus haut sous forme d'une suspension dans l'eau. On mélange ensuite cette suspension avec une solution ou suspension d'un composé de cérium du même type que celle décrite plus haut.

Le mélange ainsi obtenu est ensuite séché, par exemple par atomisation. On entend par séchage par atomisation un séchage par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

Le produit séché notamment par atomisation est ensuite calciné dans les mêmes conditions que celles qui viennent d'être décrites pour le premier procédé.

Les compositions de l'invention telles que décrites plus haut ou telles qu'obtenues par le procédé de préparation décrit précédemment se présentent sous forme de poudres mais elles peuvent éventuellement être mises en forme pour se présenter sous forme de granulés, billes, cylindres ou nids d'abeille de dimensions variables.

Ces compositions peuvent être utilisées avec tout matériau employé habituellement dans le domaine de la formulation de catalyseur, c'est à dire notamment des matériaux inertes thermiquement. Ce matériau peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions avec un matériau du type de ceux mentionnés plus haut, le revêtement étant déposé sur un substrat du type par exemple monolithe métallique, par exemple FerCralloy, ou en céramique, par exemple en cordiérite, en carbure de silicium, en titanate d'alumine ou en mullite.

Ce revêtement est obtenu par mélange de la composition avec le matériau de manière à former une suspension qui peut être ensuite déposée sur le substrat.

Le système catalytique dans lequel peuvent être utilisées les compositions de l'invention peut comprendre en outre une zéolithe. La zéolithe peut être naturelle ou synthétique et elle peut être de type aluminosilicate, aluminophosphate ou silicoaluminophosphate.

Dans le cas d'une zéolithe de type aluminosilicate, cette zéolithe peut présenter un rapport atomique Si/Al d'au moins 10, plus particulièrement d'au moins 20.

Selon un mode de réalisation plus particulier de l'invention, la zéolithe comprend au moins un autre élément choisi dans le groupe comprenant le fer, le cuivre ou le cérium.

Par zéolithe comprenant au moins un autre élément on entend une zéolithe dans la structure de laquelle ont été ajoutés par échange ionique, imprégnation ou substitution isomorphe un ou plusieurs métaux du type précité.

Dans ce mode de réalisation, la teneur en métal peut être comprise entre environ 1% et environ 5%, teneur exprimée en masse d'élément métallique par rapport à la zéolithe.

On peut mentionner plus particulièrement comme zéolithes du type aluminosilicate pouvant rentrer dans la constitution du système catalytique de l'invention celles choisies dans le groupe comprenant les zéolithes bêta, gamma, ZSM 5 et ZSM 34. Pour les zéolithes de type aluminophosphate, on peut mentionner celles du type SAPO-17, SAPO-18, SAPO-34, SAPO-35, SAPO-39, SAPO-43 and SAPO-56.

Le système catalytique avec zéolithe qui vient d'être décrit peut comprendre un revêtement du type décrit plus haut et qui contient notamment un composé obtenu par simple mélange physique d'une composition selon l'invention et de la zéolithe.

L'invention concerne par ailleurs un procédé de traitement d'un gaz pour la conversion des oxydes d'azote en azote par mise en contact du gaz avec un agent réducteur azoté. Ce procédé est caractérisé en ce qu'on utilise à titre de catalyseur une composition à base de cérium, de zirconium et de tungstène ou un système catalytique selon l'invention et tels que décrits ci-dessus.

Il s'agit là d'un procédé de type SCR qui est bien connu pour l'homme du métier.

L'agent réducteur azoté peut être l'ammoniac, l'hydrazine ou n'importe quel précurseur approprié de l'ammoniac, tel que le carbonate d'ammonium, l'urée, le carbamate d'ammonium, l'hydrogèno-carbonate d'ammonium, le formiate d'ammonium ou encore les composés organométalliques contenant de l'ammoniac. L'ammoniac ou l'urée peuvent être plus particulièrement choisis.

Le procédé peut être mis en oeuvre pour le traitement d'un gaz provenant d'un moteur à combustion interne (mobile ou stationnaire) notamment d'un moteur d'un véhicule automobile, ou de gaz provenant d'une turbine à gaz, de centrales électriques fonctionnant au charbon ou au fuel ou de toute autre installation industrielle.

Selon un mode de réalisation particulier, le procédé est utilisé pour traiter le gaz d'échappement d'un moteur à combustion interne à mélange pauvre ou d'un moteur Diesel.

Du fait de l'utilisation de la composition ou du système catalytique de l'invention, le procédé de traitement du gaz peut commencer à être efficace à des températures assez basses. Par exemple, à des températures du gaz de 250°C, on peut observer une conversion des NOx en azote dans cette gamme de température à un niveau qui peut être ainsi d'au moins 30%.

Par ailleurs, les compositions et systèmes catalytiques de l'invention peuvent être aussi utilisés, en tant que catalyseurs, pour le traitement d'un gaz pour l'oxydation catalytique du monoxyde de carbone et des hydrocarbures qui sont contenus dans ce gaz. Les gaz susceptibles d'être traités dans le cadre de la présente invention sont, par exemple, ceux issus de turbines à gaz, de chaudières de centrales thermiques ou encore de moteurs à combustion interne pour véhicule automobile. Il s'agit par ailleurs de l'oxydation des composés précités par l'oxygène c'est-à-dire les réactions :

CO + 1/2O₂ → CO₂ (1)

HC (hydrocarbure) + O₂ → CO₂ + H₂O (2)

L'oxygène est ici l'oxygène en excès des gaz, car le procédé s'applique dans un milieu généralement riche en oxygène qui peut néanmoins être temporairement appauvri en oxygène. En effet, les gaz qui sont traités par ce procédé présentent un excès d'oxygène par rapport à la quantité nécessaire pour la combustion stoechiométrique des combustibles ou des carburants et, plus précisément, ces gaz présentent un excès d'oxygène par rapport à la valeur stoechiométrique λ = 1. Il s'agit donc de gaz pour lesquels la valeur de λ est supérieure à 1. Cette valeur λ est corrélée au rapport air/carburant d'une manière connue en soi notamment dans le domaine des moteurs à combustion interne. De tels gaz peuvent être ceux de moteurs essence fonctionnant en mélange pauvre (lean burn) et qui ont une teneur en oxygène (exprimée en volume) par exemple d'au moins 2% ainsi que ceux qui ont une teneur en oxygène encore plus élevée, par exemple des gaz de moteurs du type Diesel, c'est à dire d'au moins 5%, plus particulièrement d'au moins 10%, cette teneur pouvant par exemple se situer entre 5% et 20%.

On notera qu'outre les réactions d'oxydation (1) et (2) mentionnées plus haut, le procédé peut aussi, lors du traitement des gaz, mettre en oeuvre une oxydation de la fraction organique soluble, c'est-à-dire les hydrocarbures liquides provenant du carburant et de l'huile de lubrification et qui sont adsorbés sur les particules de suies produites par le moteur, ainsi qu'une oxydation de composés oxygénés, comme les aldéhydes, en dioxyde de carbone et en eau.

Outre les utilisations mentionnées ci-dessus, les compositions et systèmes catalytiques de l'invention peuvent être aussi utilisés en tant que catalyseur de l'hydrolyse de l'urée.

Les compositions et systèmes catalytiques de l'invention peuvent encore être utilisés en combinaison avec des systèmes catalytiques de type piège à NOx ou de type HC DeNOx pour la réduction sélective des NOx par des hydrocarbures ainsi que comme catalyseur de NH3 slip.

Enfin, les compositions et systèmes catalytiques de l'invention peuvent être utilisés comme catalyseur sur des filtres à particules catalysés.

Des exemples vont maintenant être donnés.

Dans ces exemples, la capacité d'adsorption des produits est mesurée par la méthode TPD qui est décrite ci-dessous.

### Méthode de désorption programmée en température (TPD)

La molécule sonde utilisée pour caractériser les sites acides en TPD est l'ammoniac.

### - Préparation de l'échantillon :

L'échantillon est porté à 500°C sous flux d'hélium selon une montée en température de 20°C/min et est maintenu à cette température durant 30 minutes afin d'enlever la vapeur d'eau et éviter ainsi d'obturer les pores.

Finalement l'échantillon est refroidi jusqu'à 100°C sous flux d'hélium à raison de 10°C/min.

### - Adsorption :

L'échantillon est ensuite soumis à un flux d'ammoniac à 100°C pendant 30 minutes. L'échantillon est soumis durant 1 heure minimum à un flux d'hélium.

### - Désorption :

La TPD est menée en effectuant une montée en température de 10°C/min jusqu'à atteindre 700°C.

Durant la montée en température on enregistre la concentration des espèces désorbées, c'est-à-dire de l'ammoniac.

### Caractérisation des matériaux

Les propriétés des compositions sont évaluées dans les conditions suivantes.

Les compositions ont été vieillies. Le vieillissement consiste à faire circuler en continu un mélange gazeux synthétique d'air contenant 10% vol de H₂O dans un réacteur contenant la composition. La température du réacteur est portée à 750°C pendant 16 heures en pallier.

Les compositions à l'état vieilli sont ensuite évaluées en test catalytique. Dans ce test, on fait passer sur la composition (90 mg) un mélange synthétique (30 L/h) représentatif de l'application (tableau 1).

**Tableau 1**

| Composition d'un mélange représentatif | |
|---|---|
| NH₃ | 500 vpm |
| NO | 500 vpm |
| O₂ | 13 vol% |
| H₂O | 5 vol% |
| N₂ | complément |

On suit la conversion des NOx en fonction de la température de la composition.

### EXEMPLE 1 COMPARATIF

Cet exemple décrit une composition qui est préparée par un procédé dans lequel on imprègne par une solution de métatungstate un composé à base d'hydroxydes de cérium et de zirconium préalablement préparé.

On mélange à 4 litres d'eau une quantité de 153 g d'une solution de sulfate de zirconium (17,3 % en poids en ZrO₂) et de 40 g d'une solution de nitrate de cérium (20 % en poids en CeO₂). A ce mélange on ajoute ensuite une solution alcaline (ammoniaque 6N) pour ajuster le pH à une valeur de 9,5. Le précipité formé est récupéré par filtration et il est ensuite imprégné par 11,2 g de solution de métatungstate d'ammonium (50 % en poids en WO₃). Le produit imprégné est ensuite calciné à une température de 800°C (palier de 4 heures, montée 4°C/min).

Le produit obtenu répond à la composition en masse suivante :
- oxyde de cérium : 20%
- oxyde de zirconium : 66%
- oxyde de tungstène :14%

Il présente à l'issue de la calcination donnée plus haut une surface spécifique de 24 m²/g.

Le diagramme RX montre que le produit se présente sous la forme d'une phase d'oxyde mixte cérium/zirconium tétragonale majoritaire et d'une phase d'oxyde de cérium cubique. Il n'y a pas de phase monoclinique.

### EXEMPLE 2 COMPARATIF

Cet exemple décrit une composition qui est préparée par un procédé dans lequel on imprègne par une solution de métatungstate un composé à base d'oxydes de cérium et de zirconium préalablement préparé.

On part d'un oxyde mixte de cérium et zirconium de teneur en masse en oxyde de cérium de 15% et en oxyde de zirconium de 85% et de surface spécifique de 100 m²/g. Il se présente sous forme d'une phase cristallographique pure correspondant à une zircone tétragonale. On prépare par ailleurs une solution aqueuse de métatungstate d'ammonium.

On imprègne (imprégnation à sec) 10 g de l'oxyde mixte ci-dessus par la solution de métatungstate d'ammonium. Puis on sèche le produit à l'étuve à 120°C pendant 1 heure. Le produit est ensuite calciné à 800°C (palier de 4 heures, montée 4°C/min).

Le produit obtenu répond à la composition en masse d'oxyde suivante :
- oxyde de cérium : 13%
- oxyde de zirconium : 72%
- oxyde de tungstène : 15%

Il présente à l'issue de la calcination donnée plus haut une surface spécifique de 44 m²/g.

### EXEMPLE 3

Cet exemple concerne une composition à base d'oxydes de zirconium, de cérium et de tungstène selon l'invention dans les proportions en masse suivantes d'oxyde de 74%, 15% et 11% respectivement.

On prépare un hydroxyde de zirconium selon l'exemple 3 de WO2007/088326. Avant le traitement hydrothermal, on forme à partir de l'hydroxyde de zirconium précipité et lavé une suspension (contenant 100 g en ZrO₂) et on y ajoute 220 g d'une solution aqueuse de métatungstate d'ammonium (à 8% en WO₃). On procède ensuite à un traitement hydrothermal à 3 bars pendant 5 heures. Après le traitement hydrothermal, on dilue la suspension obtenue avec de l'eau désionisée à un volume total de 1 L. On y ajoute progressivement 103 g d'une solution de nitrate du cérium (III) (contenant 20,3 g en CeO₂). On sèche le milieu obtenu par atomisation avec un atomiseur de laboratoire à une température d'entrée des gaz de 100°C. L'hydroxyde séché est ensuite calciné sous air à 800°C (palier de 2 heures, montée 4°C/min).

Il présente à l'issue de la calcination donnée plus haut une surface spécifique de 62 m²/g.

Le diagramme RX montre que le produit se présente sous la forme d'une phase d'oxyde mixte cérium/zirconium tétragonale et d'une phase monoclinique. Le rapport tétragonale/monoclinique est de 9. On n'observe pas de phase cristallisée contenant du tungstène

### EXEMPLE 4

Cet exemple concerne une composition à base d'oxydes de zirconium, de cérium et de tungstène selon l'invention dans les proportions en masse suivantes d'oxydes de 68%, 20% et 12% respectivement.

On procède comme dans l'exemple 3 mais en utilisant 220 g d'une solution aqueuse de métatungstate de sodium (à 8% WO₃). On ajuste ensuite le pH du milieu à une valeur de 7 avec de l'acide nitrique dilué (HNO₃ à 30%). Le produit solide obtenu est séparé de la phase aqueuse, lavé à l'eau puis remis en suspension pour subir un traitement hydrothermal dans les mêmes conditions que dans l'exemple 3. Après le traitement hydrothermal, on sèche 168 g du composé à base d'hydroxyde zirconium et de tungstène ainsi obtenu. On imprègne ce composé par 128 g d'une solution de nitrate du cérium (III) (contenant 29,4 g en CeO₂). Le produit obtenu après l'étape d'imprégnation est calciné sous air à 800°C (palier de 2 heures, montée 4°C/min).

Il présente à l'issue de la calcination donnée plus haut une surface spécifique de 60 m²/g.

On donne dans le tableau 2 ci-dessous pour chacune des compositions des exemples 1 à 4 :
- la surface spécifique après vieillissement à 750°C 16 heures sous une atmosphère d'air à 10% d'eau;
- les structures cristallographiques après vieillissement dans les mêmes conditions;
- les capacités d'adsorption de l'ammoniac des compositions après calcination sous air à 800°C;
- le taux de conversion des NOx mesurés lors de l'évaluation dans les conditions décrites plus haut.

**Tableau 2**

| Exemple | Surface spécifique m²/g | Structure cristallographique* | capacité d'adsorption de NH₃ (ml/g) | Conversion des NOx en % à 250°C |
|---|---|---|---|---|
| 1 comparatif | 23 | Pas de phase M Pas de phase W | 2,1 | 38 |
| 2 comparatif | 36 | Phases Q et M Q/M = 9 Présence de phase W | 3,8 | 26 |
| 3 | 43 | Phases Q et M Q/M = 9 Pas de phase W | 5,3 | 42 |
| 4 | 44 | Phases Q et M Q/M = 9 Pas de phase W | 5,7 | 50 |

| | | | | |
|---|---|---|---|---|
| *Q : phase tétragonale M : phase monoclinique W : phase cristallisée contenant du tungstène Q/M : rapport de la phase tétragonale à la phase monoclinique mesuré par le rapport des intensités des pics comme décrit plus haut. | | | | |

On voit que les compositions de l'invention présentent une efficacité améliorée pour la conversion des NOx par rapport aux compositions comparatives même à une température aussi basse que 250°C. Par ailleurs du fait de leur capacité d'adsorption augmentée de NH₃ elles ont pour avantage de diminuer le risque de fuite d'ammoniac pendant le fonctionnement d'un moteur par exemple. En outre, cette capacité d'adsorption améliorée permet au système catalytique d'être efficace même dans les périodes de fonctionnement où il n'y a pas d'injection d'ammoniac.

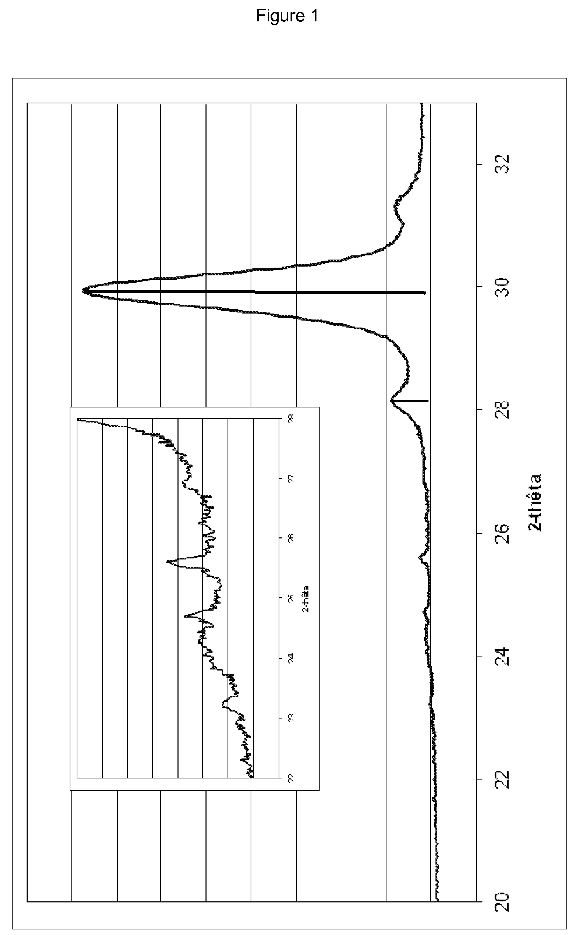

La figure 1 annexée est le diagramme RX du produit de l'exemple 2 comparatif après vieillissement à 750°C 16 heures sous une atmosphère d'air à 10% d'eau. Ce diagramme montre que le produit se présente sous la forme d'une phase d'oxyde mixte cérium/zirconium tétragonale (pic 2-thêta vers 30°) et d'une phase monoclinique (pic 2-thêta vers 28,2°). Le rapport tétragonale/monoclinique obtenu en faisant le rapport des hauteurs des deux pics précités (ces hauteurs figurent en trait épais sur le diagramme) est de 9. Le cadre en incrustation dans le diagramme et qui montre un agrandissement de la zone 2-thêta 22° à 2-thêta 29° fait apparaître des phases cristallisées contenant un tungstate de formule Ce₄W₉O₃₃ à 2-thêta 23,2 ; 24,7°; 25,6° et 26,9°.

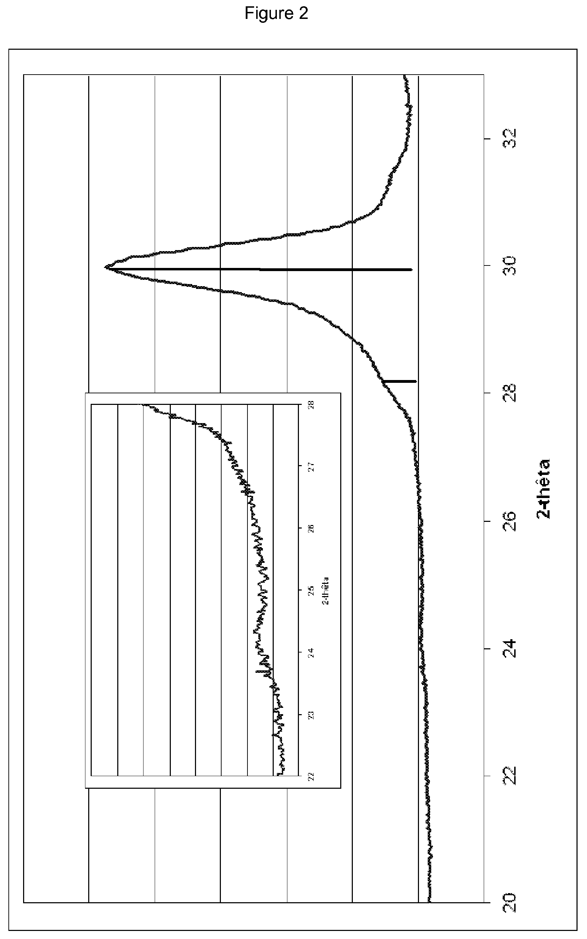

La figure 2 est le diagramme RX du produit de l'exemple 4 après vieillissement à 750°C 16 heures sous une atmosphère d'air à 10% d'eau. Ce diagramme montre par les mêmes pics que dans la figure 1 que le produit se présente sous la forme d'une phase d'oxyde mixte cérium/zirconium tétragonale et d'une phase monoclinique. Le rapport tétragonale/monoclinique, mesuré comme dans la figure 1, est de 9. Le cadre en incrustation qui correspond au même agrandissement que dans la figure 1 montre que l'on n'observe pas ici de phase cristallisée contenant du tungstène.

## Revendications

1. Composition à base de cérium, de zirconium et de tungstène, **caractérisée en ce qu'**elle présente les teneurs massiques suivantes, exprimées en oxyde :
- oxyde de cérium : entre 5 et 30%;
- oxyde de tungstène : entre 2 et 17%;
- le complément en oxyde de zirconium
et **en ce qu'**après un vieillissement à 750°C sous une atmosphère d'air à 10% d'eau sur une durée de 16 heures elle présente une structure cristallographique biphasique comprenant une phase de zircone tétragonale et une phase de zircone monoclinique, sans présence d'une phase cristallisée contenant du tungstène.

2. Composition selon la revendication 1, **caractérisée en ce qu'**elle présente après le vieillissement précité une surface spécifique d'au moins 30 m²/g.

3. Composition selon la revendication 1, **caractérisée en ce qu'**elle présente après le vieillissement précité une surface spécifique d'au moins 40 m²/g.

4. Composition selon l'une des revendications précédentes, **caractérisée en ce qu'**elle présente une structure cristallographique biphasique dans laquelle la phase de zircone tétragonale et la phase de zircone monoclinique sont dans un rapport d'au moins 5.

5. Procédé de préparation d'une composition selon l'une des revendications précédentes, **caractérisée en ce qu'**il comprend les étapes suivantes :
- (a) on prépare une solution aqueuse comportant des anions sulfates et un sel de zirconium dans des proportions telles que le rapport ZrO₂ / SO₃ est compris entre 1/0,40 à 1/0,52,
- (b) on refroidit la solution à une température inférieure à 25°C,
- (c) on ajoute un composé alcalin afin de précipiter un hydroxyde amorphe de zirconium,
- (d) on filtre et on lave l'hydroxyde de zirconium avec de l'eau ou un composé alcalin pour éliminer les quantités résiduelles de sulfate,
- (e) on mélange l'hydroxyde de zirconium provenant de l'étape (d) avec une solution ou une suspension d'un sel ou d'un composé de tungstène,
- (f) on soumet à un traitement hydrothermal à une pression d'au plus 6 bars le mélange obtenu à l'étape (e) ce par quoi on obtient un composé à base de tungstène et d'hydroxyde de zirconium qui peut être soit séché pour être obtenu sous forme solide soit maintenu sous forme d'une suspension,
- (g) soit on imprègne le composé à base de tungstène et d'hydroxyde de zirconium solide avec une solution ou une suspension de sels ou de composés de cérium, soit on mélange le composé à base de tungstène et d'hydroxyde de zirconium sous forme d'une suspension avec une solution ou une suspension de sels ou de composés de cérium,
- (h) on calcine le composé à base de tungstène et d'hydroxyde de zirconium après imprégnation ou bien on sèche et on calcine la suspension issue du mélange du composé à base de tungstène et d'hydroxyde de zirconium avec la solution ou la suspension de sels ou de composés de cérium obtenue à l'étape (g).

6. Procédé selon la revendication 5, **caractérisée en ce qu'**à l'issue de l'étape (e) on ajuste le pH du mélange obtenu à une valeur comprise entre 6 et 8 par addition d'un acide.

7. Procédé selon la revendication 5 ou 6, **caractérisée en ce qu'**à l'étape (h) on effectue le séchage de la suspension par atomisation.

8. Système catalytique, **caractérisé en ce qu'**il comprend une composition selon l'une des revendications 1 à 4.

9. Système catalytique selon la revendication 8, **caractérisé en ce qu'**il comprend en outre une zéolithe.

10. Procédé de traitement d'un gaz pour la conversion des oxydes d'azote en azote par mise en contact du gaz avec un agent réducteur azoté, **caractérisé en ce qu'**on utilise une composition ou un système catalytique selon l'une des revendications 1 à 4 ou 8 à 9.

11. Procédé selon la revendication 10, **caractérisé en ce qu'**on utilise l'ammoniac ou l'urée comme agent réducteur azoté.

12. Procédé de traitement d'un gaz pour l'oxydation catalytique du monoxyde de carbone et des hydrocarbures qui y sont contenus **caractérisé en ce qu'**on utilise une composition ou un système catalytique selon l'une des revendications 1 à 4 ou 8 à 9.

13. Procédé selon l'une des revendications 10 à 12, **caractérisé en ce qu'**on traite un gaz d'échappement d'un moteur d'un véhicule automobile.

## Patentansprüche

1. Eine Zusammensetzung auf Basis von Cer, Zirkonium und Wolfram, **dadurch gekennzeichnet, dass** sie die folgenden in Oxid ausgedrückten Gewichtsanteile aufweist:
- Ceroxid: zwischen 5 und 30 %;
- Wolframoxid: zwischen 2 und 17 %;
- den Rest als Zirkoniumoxid,
und dass sie nach 16 Stunden Alterung bei 750 °C in einer Luftatmosphäre mit 10 % Wasser eine kristallographische Zweiphasenstruktur, beinhaltend eine tetragonale Zirkonoxidphase und eine monokline Zirkonoxidphase, ohne Anwesenheit einer wolframhaltigen kristallinen Phase, aufweist.

2. Zusammensetzung gemäß Anspruch 1, **dadurch gekennzeichnet, dass** sie nach der oben erwähnten Alterung eine spezifische Oberfläche von mindestens 30 m²/g aufweist.

3. Zusammensetzung gemäß Anspruch 1, **dadurch gekennzeichnet, dass** sie nach der oben erwähnten Alterung eine spezifische Oberfläche von mindestens 40 m²/g aufweist.

4. Zusammensetzung gemäß einem der vorhergehenden Ansprüche, **dadurch gekennzeichnet, dass** sie eine kristallographische Zweiphasenstruktur aufweist, in der sich die tetragonale Zirkonoxidphase und die monokline Zirkonoxidphase in einem Verhältnis von mindestens 5 befinden.

5. Ein Verfahren zur Zubereitung einer Zusammensetzung gemäß einem der vorhergehenden Ansprüche, **dadurch gekennzeichnet, dass** es die folgenden Schritte beinhaltet:
(a) Zubereiten einer wässrigen Lösung, die Sulfatanionen und ein Zirkoniumsalz in derartigen Anteilen umfasst, dass das Verhältnis von ZrO₂ : SO₃ zwischen 1 : 0,40 und 1 : 0,52 liegt,
(b) Abkühlen der Lösung auf eine Temperatur unter 25 °C,
(c) Zugeben einer alkalischen Verbindung zur Ausfällung eines amorphen Zirkoniumhydroxids,
(d) Filtrieren und Waschen des Zirkoniumhydroxids mit Wasser oder einer alkalischen Verbindung zur Entfernung der Restmengen von Sulfat,
(e) Mischen des Zirkoniumhydroxids aus Schritt (d) mit einer Lösung oder Suspension eines Wolframsalzes oder einer Wolframverbindung,
(f) Aussetzen der in Schritt (e) erhaltenen Mischung gegenüber einer hydrothermalen Behandlung bei einem Druck von höchstens 6 bar, wodurch eine Verbindung auf Basis von Wolfram und Zirkoniumhydroxid erhalten wird, die entweder getrocknet werden kann, um in fester Form erhalten zu werden, oder in Form einer Suspension beibehalten werden kann,
(g) entweder Imprägnieren der Verbindung auf Basis von Wolfram und festem Zirkoniumhydroxid mit einer Lösung oder Suspension von Cer-Salzen oder Cer-Verbindungen oder Mischen der Verbindung auf Basis von Wolfram und Zirkoniumhydroxid in Form einer Suspension mit einer Lösung oder Suspension von Cer-Salzen oder Cer-Verbindungen,
(h) Kalzinieren der Verbindung auf Basis von Wolfram und Zirkoniumhydroxid nach dem Imprägnieren oder Trocknen und Kalzinieren der Suspension aus der Mischung der Verbindung auf Basis von Wolfram und Zirkoniumhydroxid mit der Lösung oder Suspension von Cer-Salzen oder Cer-Verbindungen, welche in Schritt (g) erhalten wurde.

6. Verfahren gemäß Anspruch 5, **dadurch gekennzeichnet, dass** nach Schritt (e) der pH-Wert der erhaltenen Mischung durch Zugabe einer Säure auf einen Wert zwischen 6 und 8 angepasst wird.

7. Verfahren gemäß Anspruch 5 oder 6, **dadurch gekennzeichnet, dass** in Schritt (h) das Trocknen der Suspension durch Atomisierung durchgeführt wird.

8. Ein Katalysatorsystem, **dadurch gekennzeichnet, dass** es eine Zusammensetzung gemäß einem der Ansprüche 1 bis 4 beinhaltet.

9. Katalysatorsystem gemäß Anspruch 8, **dadurch gekennzeichnet, dass** es außerdem einen Zeolithen beinhaltet.

10. Ein Verfahren zur Bearbeitung eines Gases für die Umwandlung von Stickoxiden zu Stickstoff durch das In-Kontakt-Bringen des Gases mit einem stickstoffhaltigen Reduktionsmittel, **dadurch gekennzeichnet, dass** eine Zusammensetzung oder ein Katalysatorsystem gemäß einem der Ansprüche 1 bis 4 oder 8 bis 9 verwendet wird.

11. Verfahren gemäß Anspruch 10, **dadurch gekennzeichnet, dass** Ammoniak oder Harnstoff als stickstoffhaltiges Reduktionsmittel verwendet wird.

12. Ein Verfahren zur Bearbeitung eines Gases für die katalytische Oxidation von Kohlenmonoxid und darin enthaltenen Kohlenwasserstoffen, **dadurch gekennzeichnet, dass** eine Zusammensetzung oder ein Katalysatorsystem gemäß einem der Ansprüche 1 bis 4 oder 8 bis 9 verwendet wird.

13. Verfahren gemäß einem der Ansprüche 10 bis 12, **dadurch gekennzeichnet, dass** ein Abgas eines Motors eines Kraftfahrzeugs bearbeitet wird.

## Claims

1. A composition based on cerium, zirconium and tungsten, **characterised in that** it exhibits the following mass contents, expressed in oxide:
- cerium oxide: between 5 and 30%;
- tungsten oxide: between 2 and 17%;
- the remainder in zirconium oxide
and **in that** after an ageing at 750°C in an atmosphere of air with 10% of water for a duration of 16 hours it exhibits a two-phase crystallographic structure comprising a tetragonal zirconia phase and a monoclinic zirconia phase, without the presence of a crystallised phase containing tungsten.

2. The composition according to claim 1, **characterised in that** after the aforementioned ageing it exhibits a specific surface area of at least 30 m²/g.

3. The composition according to claim 1, **characterised in that** after the aforementioned ageing it exhibits a specific surface area of at least 40 m²/g.

4. The composition according to one of the preceding claims, **characterised in that** it exhibits a two-phase crystallographic structure in which the tetragonal zirconia phase and the monoclinic zirconia phase are in a ratio of at least 5.

5. A method of preparing a composition according to one of the preceding claims, **characterised in that** it comprises the following steps:
(a) an aqueous solution is prepared comprising sulfate anions and a zirconium salt in such proportions that the ZrO₂:SO₃ ratio is between 1:0.40 to 1:0.52,
(b) the solution is cooled to a temperature below 25°C,
(c) an alkaline compound is added in order to precipitate an amorphous zirconium hydroxide,
(d) the zirconium hydroxide is filtered and washed with water or an alkaline compound to eliminate the residual quantities of sulfate,
(e) the zirconium hydroxide from step (d) is mixed with a solution or a suspension of a tungsten salt or compound,
(f) the mixture obtained in step (e) is subjected to a hydrothermal treatment at a temperature of at most 6 bar, by means of which a compound based on tungsten and zirconium hydroxide is obtained which may either be dried to be obtained in solid form or kept in the form of a suspension,
(g) either the compound based on tungsten and solid zirconium hydroxide is impregnated with a solution or suspension of cerium salts or compounds, or the compound based on tungsten and zirconium hydroxide in the form of a suspension is mixed with a solution or suspension of cerium salts or compounds,
(h) the compound based on tungsten and zirconium hydroxide is calcined after impregnation or the suspension from the mixture of the compound based on tungsten and zirconium hydroxide with the solution or suspension of cerium salts or compounds obtained in step (g) is dried and calcined.

6. The method according to claim 5, **characterised in that** at the end of step (e) the pH of the mixture obtained is adjusted to a value of between 6 and 8 by adding an acid.

7. The method according to claim 5 or 6, **characterised in that** in step (h) the suspension is dried by atomisation.

8. A catalytic system, **characterised in that** it comprises a composition according to one of claims 1 to 4.

9. The catalytic system according to claim 8, **characterised in that** it further comprises a zeolite.

10. A method of treating a gas in order to convert nitrogen oxides into nitrogen by placing the gas into contact with a nitrogenous reducing agent, **characterised in that** a composition or a catalytic system according to one of claims 1 to 4 or 8 to 9 is used.

11. The method according to claim 10, **characterised in that** ammonia or urea is used as a nitrogenous reducing agent.

12. The method of treating a gas for the catalytic oxidation of carbon monoxide and the hydrocarbons contained therein, **characterised in that** a composition or a catalytic system according to one of claims 1 to 4 or 8 to 9 is used.

13. The method according to one of claims 10 to 12, **characterised in that** an exhaust gas from an engine of a motor vehicle is treated.
